# NEUE EUROPÄISCHE PATENTSCHRIFT

(11) **EP 1 105 662 B2**
(45) Veröffentlichungstag und Bekanntmachung des Hinweises auf die Entscheidung über den Einspruch: **17.01.2007**
(45) Hinweis auf die Patenterteilung: 12.06.2002
(21) Anmeldenummer: 99941590.4
(22) Anmeldetag: 11.08.1999
(51) Int. Cl.: F16H 57/02

(54) **VERTEILERGETRIEBE FÜR EIN KRAFTFAHRZEUG**
INTERMEDIATE GEARBOX FOR A VEHICLE
BOITE DE VITESSES INTERMEDIAIRE POUR AUTOMOBILE

(30) Priorität: 29.08.1998 DE 19839481
(43) Veröffentlichungstag der Anmeldung: 13.06.2001
(73) Patentinhaber: Schaeffler KG, 91074 Herzogenaurach (DE)
(72) Erfinder: JACOB, Werner, D-60598 Frankfurt am Main (DE); KRÖBER, Erich, D-66909 Krottelbach (DE)
(86) Internationale Anmeldenummer: PCT/EP1999/005885
(87) Internationale Veröffentlichungsnummer: WO 2000/012916

(56) Entgegenhaltungen:
- WO-A-93/17251
- DE-C- 497 760
- GB-A- 206 606
- GB-A- 263 458
- JP-A- 40 323
- JP-A- 181 547
- JP-A- 566 327
- JP-A- 4 426 242
- US-A- 3 792 625
- US-A- 3 900 232
- US-A- 4 261 219
- HAMPP, W.: "Wälzlager - Berechnung und Gestaltung" , SPRINGER VERLAG , BERLIN/HEIDELBERG/NEW YORK XP002124530 23 in der Anmeldung erwähnt Abbildung 88

## Beschreibung

### Anwendungsgebiet der Erfindung

Die Erfindung betrifft ein Verteilergetriebe mit einer Kegelritzelwelle, die über zwei von einander beabstandete und axial vorgespannte Schrägkugellager in einem Getriebegehäuse gelagert ist und die mit einem Kegelritzel über ein Tellerrad ein im Getriebegehäuse gelagertes Ausgleichsgetriebe antreibt, wobei im Ausgleichsgetriebe Achswellen gelagert sind, die über Abtriebs- und Ausgleichsräder miteinander in Wirkverbindung stehen, wobei die Schrägkugellager als einseitig belastbare zweireihige Tandem-Schrägkugellager ausgebildet sind, die zueinander in O-Anordnung angestellt sind und jeweils einstückige Lagerinnenringe und einstückige Lageraußenringe aufweisen.

### Hintergrund der Erfindung

Mit derartigen Verteilergetrieben wird erreicht, dass Antriebsräder jeder Achswelle bei Kurvenfahrt trotz unterschiedlicher Drehzahl schlupffrei abrollen können. Eine Kegelritzelwelle oder eine Kardanwelle treibt über ein Kegelritzel ein Tellerrad an, das drehfest mit dem Ausgleichsgetriebe verbunden ist, in dessen Inneren Abtriebsräder und Ausgleichsräder gelagert sind. Bei Geradeausfahrt sind diese Ausgleichsräder im Ausgleichsgetriebe in Ruhe, so dass sich beide Achswellen in gleicher Drehzahl wie das Tellerrad drehen. Bei Kurvenfahrt tritt eine Drehzahldifferenz zwischen beiden Achswellen auf. Dabei rotieren die Ausgleichsräder und bewirken, dass die Drehzahlzunahme der einen Achswelle gegenüber der Drehzahl des Tellerrades genauso groß ist, wie die Drehzahlabnahme der anderen Achswelle gegenüber dem Tellerrad.

Ein vergleichbares Ausgleichsgetriebe ist beispielhaft in dem Fachbuch " Wälzlagerungen - Berechnung und Gestaltung " von W. Hampp, Springer-Verlag Berlin/Heidelberg/New York in der Abbildung 88 dargestellt. Die Kegelritzelwelle ist dabei über zwei voneinander beabstandete Kegelrollenlager gelagert, die in axialer Richtung vorgespannt sind. Die Vorspannung erfolgt derart, dass diese Kegelrollenlager mit Hilfe einer Schraubverbindung in axialer Richtung aufeinander zubewegt werden.

Nachteilig dabei ist, dass bedingt durch die Vorspannung der Kegelrollenlager zwischen Stirnfläche der Kegelrollen und Bordfläche der Lagerringe eine gleitende Reibung einsetzt, die zu einem Verschleiß an Kegelrollen und Bordflächen führt. Dieser Verschleiß wiederum ist für einen Vorspannungsverlust der Lagerung verantwortlich, in dessen Gefolge wiederum eine Spielvergrößerung in der Verzahnung zwischen Kegelritzel und Tellerrad mit ihren negativen Folgen eintritt.

In diesem Zusammenhang ist aus der US 3,792,625, die teilweise die vorkennzeichnenden Merkmale des unabhängigen Anspruchs zeigt, ein Verteilergetriebe bekannt, dessen Kegelritzelwelle über zwei voneinander beabstandete Schrägkugellager gelagert ist.

Aus der gattungsgemäßen JP 5-66327 ist die Lagerung einer Kegelritzelwelle für ein Verteilergetriebe eines Kraftfahrzeuges bekannt, die über zwei voneinander beabstandete Schrägkugellager realisiert ist. Dabei sind sowohl die Lagerinnenringe als auch die Lageraußenringe mit einer Kugellaufrille versehen, die beidseitig von je einer Schulter begrenzt ist, so dass die Lagerringe jeweils drei Schultern aufweisen. Außerdem weisen die Laufbahnen der einzelnen Schrägkugellager einen gleichen Durchmesser auf.

### Zusammenfassung der Erfindung

Der Erfindung liegt daher die Aufgabe zugrunde, eine verbesserte Lagerung der Kegelritzelwelle eines Verteilergetriebes zu entwickeln.

Erfindungsgemäß wird diese Aufgabe nach dem kennzeichnenden Teil von Anspruch 1 dadurch gelöst, dass die Laufbahnen eines jeden der beiden Tandem-Schrägkugellager einen unterschiedlichen Durchmesser aufweisen und dass die Lagerinnenringe und die Lageraußenringe eines jeden der Tandem-Schrägkugellager mit nur zwei Schultern versehen sind.

Die Vorteile der erfindungsgemäßen gegenüber der klassischen Lösung mit Kegelrollenlagern sind folgende:

Bedingt durch das wesentlich geringere Reibmoment aufgrund fehlender Gleitreibung der erfindungsgemäßen Lagerung ergeben sich zwangsläufig auch geringere Lagertemperaturen und demnach auch eine geringere Ölsumpftemperatur. Insgesamt wird also ein besserer Wirkungsgrad und eine geringere Verlustleistung der Lagerung erzielt. Beim Einbau der erfindungsgemäßen Lagerung in ein Kraftfahrzeug wird nun als Folgeleistung auf Grund der geringeren Verlustleistung ein niederigerer Kraftstoffverbrauch möglich. Die um etwa 40°C geringeren Temperaturen des Ölsumpfes machen es auch möglich, dass für das Getriebegehäuse der Brennkraftmaschine ein leichterer Gehäusewerkstoff, beispielsweise eine Magnesiumlegierung verwendet werden kann, die sich wiederum gewichtsersparend bemerkbar macht.

Ein weiterer Vorteil ist ein geringerer Verschleiß der Lagerung, der nur etwa 1/10 des Verschleißanteils der klassischen Lösung beträgt. Dieser geringe Verschleiß sorgt dafür, daß ein axiales Verschieben der Kegelritzelwelle mit der bekannten negativen Spielvergrößerung in der Verzahnung zwischen Kegelritzel der Kegelritzelwelle und dem mit dem Ausgleichsgetriebe verbundenen Tellerrad vermieden ist.

Weitere vorteilhafte Ausgestaltungen der erfindungsgemäßen Lösung sind in den Unteransprüchen 2 bis 6 beschrieben. So ist nach Anspruch 2 vorgesehen, dass die Laufbahnen eines Lagers einen gleichen oder einen unterschiedlichen Druckwinkel aufweisen.

Nach einem weiteren Merkmal gemäß Anspruch 3 sollen die Lagerkugeln beider Laufbahnen eines Lagers in Käfigen geführt sein und einen gleichen oder einen unterschiedlichen Durchmesser aufweisen.

Aus Anspruch 4 geht hervor, dass das am Kegelritzel der Kegelritzelwelle benachbart angeordnete erste zweireihige Tandem - Schrägkugellager größer als das zugehörige zweite dimensoniert ist. Diese zweckmäßige Ausgestaltung wird deshalb vorgenommen, da in unmittelbarer Nähe des Kegelritzels die größten Belastungen sowohl in radialer als auch in axialer Richtung aufgenommen werden müssen.

Aus Anspruch 5 geht hervor, dass der Innenring des vom Kegelritzel entfernt angeordneten zweiten zweireihigen Tandem - Schrägkugellagers in axialer Richtung an einer verformbaren Hülse abgestützt ist, wobei nach Anspruch 6 die Hülse an einem am Schaft der Kegelritzelwelle vorgesehenen Absatz abgestützt ist. Nach Einstellen der gewünschten Vorspannung sorgt diese Hülse dafür, dass durch Einwirken einer Gegenkraft die Stellschraube ebenfalls unter Vorspannung gesetzt ist und so ein Lösen dieser Gewindeschraube nicht möglich ist.

Die Erfindung wird an nachstehendem Ausführungsbeispiel näher erläutert.

### Kurze Beschreibung der Zeichnungen

- Figur 1: einen Schnitt durch ein Verteilergetriebe eines Kraftfahrzeuges nach dem bisherigen Stand der Technik,
- Figur 2: einen Längsschnitt durch eine Kegelritzelwelle mit der erfindungsgemäßen Lagerung.

### Ausführliche Beschreibung der Zeichnungen

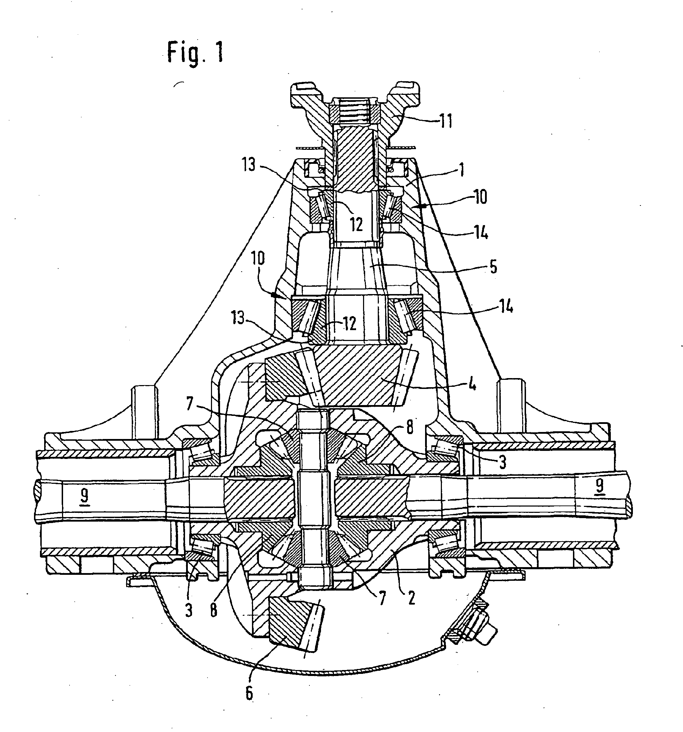

Das in Figur 1 dargestellte Kraftfahrzeug-Verteilergetriebe weist ein Gehäuse 1 auf, in dem ein Ausgleichsgetriebe 2 über zwei Kegelrollenlager 3 gelagert ist. Ein Kegelritzel 4 einer Kegelritzelwelle 5 treibt ein Tellerrad 6 an, das wiederum das Ausgleichsgetriebe 2 in Bewegung setzt. Das Ausgleichsgetriebe 2 ist über Ausgleichsräder 7 und Abtriebsräder 8 mit je einer Achswelle 9 verbunden, die nicht dargestellte Räder antreiben. Die Kegelritzelwelle 5 ist ebenfalls im Gehäuse 1 über zwei weitere von einander beabstandete Kegelrollenlager 10 gehalten, die durch ein Gewindeteil 11 in axialer Richtung aufeinander zubewegt, d. h. unter Vorspannung gesetzt sind.

Die Innenringe 12 der Kegelrollenlager 10 sind mit einem radial nach außen weisenden Bord 13 versehen, an dem die Stirnflächen der Kegelrollen 14 anlaufen. Durch die vorgespannten Kegelrollenlager 10 entsteht eine gleitende Reibung zwischen Stirnfläche der Kegelrollen 14 und Innenfläche der Borde 13, die zu einem Veschleiß durch Materialabtrag führt und sich negativ auf das Verteilergetriebe auswirkt. D. h., eine solche Lagerung der Kegelritzelwelle 5 nach dem Stand der Technik hat ein hohes Reibmoment, hohe Lager - und Öltemperaturen sowie einen schlechten Wirkungsgrad. Außerdem führt der durch Verschleiß an den Kegelrollen und Bordflächen sich einstellende Vorspannungsverlust zu einer Spielvergrößerung in der Verzahnung zwischen Antriebskegelrad 4 und Tellerrad 6.

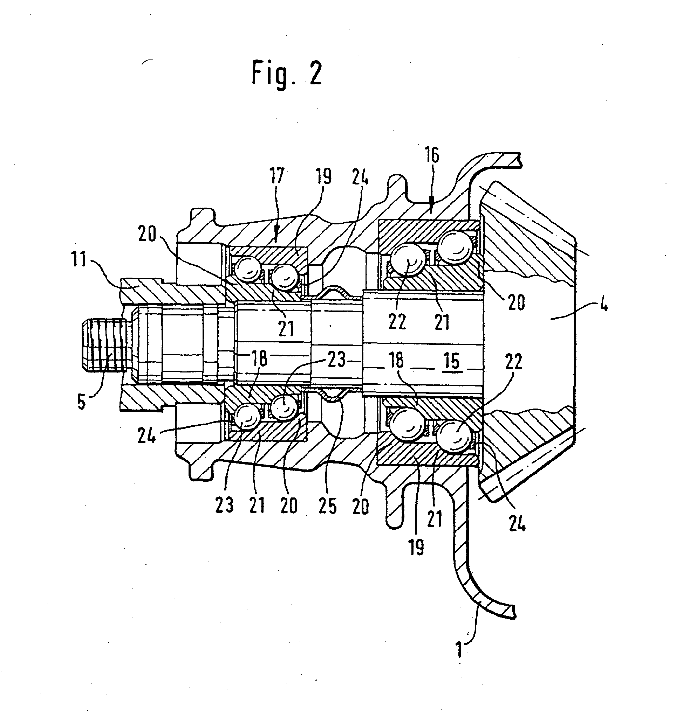

Die in Figur 2 im dargestellte Kegelritzelwelle 5 eines Verteilergetriebes weist einen abgestuften Schaft 15 auf, an dessen rechtsseitigem Ende das Kegelritzel 4 liegt. Im Gehäuse 1 ist die Kegelritzelwelle 5 über zwei voneinander beabstandete Tandem - Schrägkugellager 16 und 17 gehalten, die jeweils einstückige Lagerinnenringe 18 und einstückige Lageraußenringe 19 aufweisen, die je zwei Schultern 20 und 21 besitzen. Die Lagerkugeln 22 und 23 weisen innerhalb der Lager 16 und 17 die gleiche Größe auf und sind jeweils in Lagerkäfigen 24 geführt. Der Figur ist weiter entnehmbar, daß innerhalb eines Lagers 16 und 17 die nicht näherbezeichneten Laufbahnen der Lagerkugeln 22 und 23 einen unterschiedlichen Durchmesser besitzen. Da in der Nähe des Kegelritzels 4 die größten radialen und axialen Belastungen der Kegelritzelwellen 5 auftreten, ist das Tandem - Schrägkugellager 16 wesentlich größer dimensioniert als das Tandem - Schrägkugellager 17. Durch die O-Anordnung der beiden Tandem - Schrägkugellager 16 und 17 zueinander ist sichergestellt, dass jeweils eines der Lager 16,17 die Kraft in einer axialen Richtung aufnehmen kann, d. h. ein axiales Verschieben der Kegelritzelwelle 5 ist nicht möglich. In bekannter Weise wird nun die Vorspannung derart erzeugt, dass durch Aufschrauben des Gewindeteiles 11 auf den Schaft 15 der Kegelritzelwelle 5 das Kegelritzel 4 in Richtung Gehäuse 1, d. h. axial nach links bewegt wird, so dass beide Lager 16,17 unter Vorspannung gesetzt sind. Zwischen Lager 16 und 17 ist auf dem Schaft 15 der Kegelritzelwelle 5 eine Hülse 25 angeordnet, die sich einerseits am Innenring 18 des Lagers 17 und andererseits an einem nicht bezeichneten Absatz des Schaftes 15 abstützt. Beim Anziehen des Gewindeteiles 11 wird zunächst der Lagerinnenring 18 des Lagers 17 nach rechts verschoben, so dass auf die Hülse 25 eine Verformungskraft ausgeübt wird, d. h. diese wird sich verformen. Bedingt durch diese Verformung wird jedoch von der Hülse 25 eine Gegenkraft auf den Innenring 18 des Lagers 17 ausgeübt, so dass das Gewindeteil 11 mit dieser Gegenkraft beaufschlagt ist und sich demzufolge nicht vom Gewinde des Schaftes 15 der Kegelritzelwelle 5 lösen kann.

Im Gegensatz zur klassischen Lagerung einer Kegelritzelwelle 5 mit Kegelrollenlagern 10 ist auch bei einer relativ starken Vorspannung nur Rollreibung vorhanden, d. h. der Verschleiß wird sehr stark reduziert.

### Bezugszeichen

- 1: Gehäuse
- 2: Ausgleichsgetriebe
- 3: Kegelrollenlager
- 4: Kegelritzel
- 5: Kegelritzelwelle
- 6: Tellerrad
- 7: Ausgleichsrad
- 8: Abtriebsrad
- 9: Achswelle
- 10: Kegelrollenlager
- 11: Gewindeteil
- 12: Innenring
- 13: Bord
- 14: Kegelrolle
- 15: Schaft
- 16: Tandem - Schrägkugellager
- 17: Tandem - Schrägkugellager
- 18: Innenring
- 19: Außenring
- 20: Schulter
- 21: Schulter
- 22: Lagerkugel
- 23: Lagerkugel
- 24: Käfig
- 25: Hülse

## Patentansprüche

1. Verteilergetriebe für ein Kraftfahrzeug mit einer Kegelritzelwelle (5) die über zwei voneinander beabstandete und axial vorgespannte Schrägkugellager in einem Getriebegehäuse (1) gelagert ist und die mit einem Kegelritzel (4) über ein Tellerrad (6) ein im Getriebegehäuse (1) gelagertes Ausgleichsgetriebe (2) antreibt, wobei im Ausgleichsgetriebe (2) Achswellen (9) gelagert sind, die über Abtriebs- (8) und Ausgleichsräder (7) miteinander in Wirkverbindung stehen, wobei die Schrägkugellager als einseitig belastbare zweireihige Tandem-Schrägkugellager ausgebildet sind die zueinander in O-Anordnung angestellt sind und jeweils einstückige Lagerinnenringe und einstückige Lageraußenringe aufweisen, **dadurch gekennzeichnet, dass** die Laufbahnen eines jeden der beiden Tandem-Schrägkugellager (16, 17) einen unterschiedlichen Durchmesser aufweisen und dass die Lagerinnenringe (18) und die Lageraußenringe (19) eines jeden der Tandem-Schrägkugellager (16, 17) mit nur zwei Schultern (20, 21) versehen sind.

2. Verteilergetriebe nach Anspruch 1, **dadurch gekennzeichnet, dass** die Laufbahnen eines Lagers (16, 17) einen gleichen oder einen unterschiedlichen Druckwinkel aufweisen.

3. Verteilergetriebe nach Anspruch 1, **dadurch gekennzeichnet, dass** die Lagerkugeln (22, 23) beider Laufbahnen eines Lagers (16, 17) in Käfigen (24) geführt sind und einen gleichen oder einen unterschiedlichen Durchmesser aufweisen.

4. Verteilergetriebe nach Anspruch 1, **dadurch gekennzeichnet, dass** das dem Kegelritzel (4) der Kegelritzelwelle (5) benachbart angeordnete erste Tandem-Schrägkugellager (16) größer als das zugehörige zweite (17) dimensioniert ist.

5. Verteilergetriebe nach Anspruch 1, **dadurch gekennzeichnet, dass** der Innenring (18) des vom Kegelritzel (4) entfernt angeordneten zweiten zweireihigem Tandem-Schrägkugellagers (17) in axialer Richtung an einer verformbaren Hülse (25) abgestützt ist.

6. Verteilergetriebe nach Anspruch 5, **dadurch gekennzeichnet, dass** die Hülse (25) an einem am Schaft (15) der Kegelritzelwelle (5) vorgesehenen Absatz abgestützt ist.

## Claims

1. Transfer gearbox for a motor vehicle with a bevel pinion shaft (5) which is mounted in a gearbox casing (1) via two axially prestressed angular contact ball bearings, spaced apart from one another, and which drives a differential (2) mounted in the gearbox casing (1) by means of a bevel pinion (4) via a ring gear (6), axle shafts (9), which cooperate with one another via output gears (8) and differential gears (7), being mounted in the differential (2), the angular contact ball bearings being configured as double-row tandem ball bearings, capable of being loaded on one side, and which are arranged in an O-configuration relative to one another and respectively comprise integral inner bearing rings and integral outer bearing rings, **characterized in that** the raceways of each one of the two tandem ball bearings (16, 17) have a different diameter and **in that** the inner bearing rings (18) and the outer bearing rings (19) of each one of the tandem ball bearings (16, 17) are provided with only two shoulders (20, 21).

2. Transfer gearbox according to Claim 1,
**characterized in that** the raceways of a bearing (16, 17) have the same or a different pressure angle.

3. Transfer gearbox according to Claim 1,
**characterized in that** the ball bearings (22, 23) of both raceways of a bearing (16, 17) are guided in cages (24) and have the same or a different diameter.

4. Transfer gearbox according to Claim 1,
**characterized in that** the first tandem ball bearing (16) arranged adjacent to the bevel pinion (4) of the bevel pinion shaft (5) is larger than the associated second (17) tandem ball bearing.

5. Transfer gearbox according to Claim 1,
**characterized in that** the inner ring (18) of the second double-row tandem ball bearing (17) arranged remotely from the bevel pinion (4) is supported on a deformable sleeve (25) in the axial direction.

6. Transfer gearbox according to Claim 5,
**characterized in that** the sleeve (25) is supported on a shoulder provided on the shaft (15) of the bevel pinion shaft (5).

## Revendications

1. Boîte de vitesses intermédiaire pour un véhicule automobile comprenant un arbre à pignon conique (5) qui est monté dans un carter de boîte de vitesses (1) par le biais de deux roulements à billes à contact oblique espacés l'un de l'autre et précontraints axialement et qui entraîne avec un pignon conique (4), par le biais d'une couronne (6) un différentiel (2) monté dans le carter de boîte de vitesses (1), des arbres d'essieu (9) étant montés dans le différentiel (2), lesquels sont en liaison coopérante l'un avec l'autre par le biais de pignons d'entraînement de sortie (8) et de pignons différentiels (7), les roulements à billes à contact oblique étant réalisés sous forme de roulements à billes à contact oblique en tandem à deux rangées pouvant être chargés d'un côté, qui sont installés l'un par rapport à l'autre suivant un agencement en 0 et qui présentent chacun des bagues intérieures de roulement et des bagues extérieures de roulement d'une seule pièce, **caractérisée en ce que** les chemins de roulement de chacun des deux roulements à billes à contact oblique en tandem (16, 17) présentent un diamètre différent et **en ce que** les bagues intérieures de roulement (18) et les bagues extérieures de roulement (19) de chaque roulement à billes à contact oblique en tandem (16, 17) sont pourvues de seulement deux épaulements (20, 21).

2. Boîte de vitesses intermédiaire selon la revendication 1, **caractérisée en ce que** les chemins de roulement d'un roulement (16, 17) présente un angle de pression identique ou différent.

3. Boîte de vitesses intermédiaire selon la revendication 1, **caractérisée en ce que** les billes du roulement (22, 23) des deux chemins de roulement d'un roulement (16, 17) sont guidées dans des cages (24) et présentent un diamètre identique ou différent.

4. Boîte de vitesses intermédiaire selon la revendication 1, **caractérisée en ce que** le premier roulement à billes à contact oblique en tandem (16) disposé à proximité du pignon conique (4) de l'arbre à pignon conique (5) est plus grand que le deuxième roulement associé (17).

5. Boîte de vitesses intermédiaire selon la revendication 1, **caractérisée en ce que** la bague intérieure (18) du deuxième roulement à billes à contact oblique en tandem (17) à deux rangées, éloigné du pignon conique (4), est supportée dans la direction axiale sur une douille déformable (25).

6. Boîte de vitesses intermédiaire selon la revendication 5, **caractérisée en ce que** la douille (25) est supportée sur un gradin prévu sur la tige (15) de l'arbre à pignon conique (5).
